# EUROPÄISCHE PATENTSCHRIFT

(11) **EP 0 882 632 B1**
(45) Veröffentlichungstag und Bekanntmachung des Hinweises auf die Patenterteilung: **29.01.2003**
(21) Anmeldenummer: 98103070.3
(22) Anmeldetag: 21.02.1998
(51) Int. Cl.: B60T 8/36

(54) **Hydraulisches Aggregat für ein Fahrzeugbremsanlage**
Hydraulic unit for a vehicle brake system
Unité hydraulique pour le system de freinage d'un véhicule

(30) Priorität: 07.06.1997 DE 19724166
(43) Veröffentlichungstag der Anmeldung: 09.12.1998
(73) Patentinhaber: ROBERT BOSCH GMBH, 70442 Stuttgart (DE)
(72) Erfinder: Pröbsting, Nikolaus, 87477 Sulzberg (DE); Krauter, Michael, 87549 Untermaiselstein (DE); Finger, Marc, 29401 Charleston (US); Lundy, James J., Jr., 2941 Charleston (US); Angle, Ron S., 29456 Ladson, S. C. (US)

(56) Entgegenhaltungen:
- EP-A- 0 699 571
- EP-B- 0 621 836
- EP-B- 0 662 891
- WO-A-96/13416
- WO-A-97/48583
- DE-A- 2 146 079
- GB-A- 2 244 527
- PATENT ABSTRACTS OF JAPAN vol. 096, no. 005, 31. Mai 1996 -& JP 08 011709 A (AISIN SEIKI CO LTD), 16. Januar 1996

## Beschreibung

### Stand der Technik

Die Erfindung geht aus von einem gattungsgemäßen hydraulischen Aggregat für eine Fahrzeugbremsanlage gemäß dem Oberbegriff des Anspruchs 1.

Durch die Druckschrift EP 0 621 836 B1 ist ein solches gattungsgemäßes Aggregat bekannt, das tauchdicht ausgebildet ist. Das hydraulische Aggregat besitzt wenigstens eine einen Kolben aufweisende Pumpe, wobei der Kolben von einem Elektromotor mittelbar antreibbar ist über einen Exzenter, der innerhalb eines Exzenterraumes drehbar ist. Weil nicht ausschließbar ist, daß der bewegte Kolben Druckmittel durch einen Dichtring oder dergleichen anläßlich des Arbeitens der Pumpe in den Exzenterraum schleppt, geht von dem Exzenterraum nach abwärts ein Kanal aus, der aus einem die wenigstens eine Pumpe aufnehmenden Gehäuseblock sich zur Atmosphäre öffnet, wobei in den Kanal ein zur Atmosphäre hin öffenbares Rückschlagventil eingebaut ist. In den Exzenterraum geschlepptes Druckmittel, das von dem Kolben abtropft, gelangt in den Kanal, belastet das Rückschlagventil, so daß dieses sich öffnet, und fließt schließlich aus dem Gehäuseblock. Dadurch wird eine Füllung des Exzenterraumes mit Druckmittel vermieden, so daß Druckmittel fern vom Elektromotor bleibt, also nicht in diesen eindringt und dadurch die Funktionstüchtigkeit des Elektromotors nicht stört.

Bei einem durch die Druckschrift WO 96/13416 bekannten hydraulischen Aggregat befindet sich der Elektromotor oberhalb eines Exzenterraumes, in dem der auf wenigstens einen Kolben einer Pumpe wirkende Exzenter drehbar ist. Von dem Exzenterraum führt wiederum nach unten ein Kanal, der unmittelbar oder mittelbar zu einer sogenannten zentralen Belüftungsstelle führt, in die ein Element eingebaut ist, das für Luft durchlässig ist, aber nicht für Wasser aus der Umgebung zu dem Zweck, per Druckausgleich beispielsweise des Exzenterraumes relativ zur Umgebungsatmosphäre zu sorgen und andererseits zumindest Spritzwasser am Eintritt in das Aggregat zu hindern. Als eine zusätzliche Maßnahme kann die zentrale Belüftungsstelle ein in der genannten Druckschrift erwähntes Rückschlagventil aufweisen. Beispielsweise könnte ein in der voranstehend genannten Druckschrift
EP 0 629 836 B1 offenbartes Rückschlagventil verwendet werden. Des weiteren weist das Aggregat wenigstens einen zur vorübergehenden Aufnahme von Druckmittel bestimmten Speicher auf, der aus einem relativ zur Umgebungsatmosphäre verschlossenen zylindrischen Hohlraum, einem darin verschiebbaren Kolben, der den Hohlraum in einen variablen Speicherraum und einen Federraum unterteilt, und einer den Kolben belastenden Feder besteht. Die Feder stützt sich an einem den Hohlraum dicht verschließenden Deckel ab. Von dem Federraum und dabei an den Deckel angrenzend geht ein Druckausgleichkanal aus, der entweder nach oben zu einem inneren Hohlraum des Elektromotors oder nach unten zu einem Hohlraum einer Abdeckhaube führt. Die Abdeckhaube überdeckt Elektromagnete von Ventilen des Aggregates und auch elektrische Komponenten, die auf einer Schaltplatine angeordnet sind. Im Betrieb des Aggregates von einem Kolben der Pumpe in den Exzenterraum geschlepptes Druckmittel tropft beispielsweise direkt in die Abdeckhaube, so daß eine Benetzung von elektrisch wirksamen Komponenten mit dem Druckmittel nicht ausschließbar ist.

### Vorteile der Erfindung

Die kennzeichnenden Merkmale des Anspruches 1 ergeben den Vorteil, daß durch Kolbenbewegungen des Kolbens der Kolbenpumpe in einen Hubelementraum, der beispielsweise ein Exzenterraum sein kann, geschlepptes Druckmittel fern von elektrischen Komponenten der wenigstens einen Federkammer zugeführt und dort gesammelt wird. Das Sammeln des verschleppten Druckmittels in der Federkammer macht bedingt durchlässige Elemente an einer zentralen Belüftungsstelle gemäß dem Stand der Technik oder ein Rückschlagventil gemäß dem Stand der Technik verzichtbar. Insoweit ergibt die Erfindung eine Kostenersparnis und auch den Vorteil eines hermetischen Verschlusses des Aggregates relativ zur Umgebung. Der Gehäuseblock mitsamt der wenigstens einen Pumpe sind ohne die Gefahr einer Beschädigung eintauchbar und untertauchbar in beispielsweise salzhaltiges Wasser.

Durch die in den Unteransprüchen aufgeführten Maßnahmen sind vorteilhafte Weiterbildungen und Verbesserungen des im Hauptanspruch angegebenen hydraulischen Aggregates möglich.

Die kennzeichnenden Merkmale des Anspruches 2 ergeben den Vorteil, daß durch Doppelnutzung von Kanalabschnitten der Gehäuseblock in preisgünstiger Weise herstellbar ist, einerseits durch das Einsparen von Kanälen und andererseits durch das Reinigen von dadurch weniger Kanälen nach deren Herstellung.

Die kennzeichnenden Merkmale des Anspruches 3 ergeben den Vorteil, daß ein durch die Druckschrift EP 0 699 571 A1 bekannter Gehäuseblock für ein hydraulisches Aggregat einer Fahrzeugbremsanlage in seiner Größe und seiner prinzipiellen inneren Ausgestaltung beibehalten werden kann, so daß lediglich die Anordnung der kennzeichnenden Merkmale der Ansprüche 1 und 2 zu sorgen ist. Dabei kann der Konstrukteur bestimmen, wieviel von dem wenigstens einen Kolben der wenigstens einen Pumpe verschlepptes Druckmittel zu speichern ist. Ist das hydraulische Aggregat lediglich zur Vermeidung von Radblockiergefahr bestimmt, so wird man den wenigstens einen Behälter kleiner ausbilden als dann, wenn das hydraulische Aggregat zusätzlich noch zum automatischen Bremsen wie zur Antriebsschlupfregelung antreibbarer Räder oder zur Fahrstabilisierung weitergebildet ist. Denn automatisches Bremsen kann ein häufigeres Einschalten der wenigstens einen Pumpe zur Folge haben.

Die kennzeichnenden Merkmale des Anspruches 4 geben ein praktisches Ausführungsbeispiel für solche Behälter an, wobei auf an sich bekannte Tiefziehtechnik zurückgegriffen ist. Die kennzeichnenden Merkmale des Anspruches 5 ergeben den Vorteil, daß in fertigungstechnisch günstiger Weise Eindringen von Wasser zwischen einen Befestigungsabschnitt des Behälters und den Gehäuseblock vermieden wird.

Die kennzeichnenden Merkmale des Anspruchs 6 ergeben einerseits den Vorteil, daß der Motor komplett einer Montagestraße zugeführt werden kann, entlang der der Motor gegen den Gehäuseblock geführt und an diesem fixiert wird, wobei als weiterer Vorteil dabei gleichzeitig eine gewollte Abdichtung gegen den Eintritt von Wasser aus der Umgebung in den Motor und in den Hubelementraum, der sich im Gehäuseblock befindet, vermieden wird. Die kennzeichnenden Merkmale des Anspruches 7 ergeben ebenfalls den Vorteil, daß in einer fertigungstechnisch günstigen Art die Dichtung herstellbar ist und infolge der dabei erstellten geometrischen Gestalt der Dichtung wenig Dichtmaterial verbraucht wird. Da das Dichtmaterial in Form einer kreisringartig geschlossenen Raupe anbringbar ist, wird mittels einer solchen Raupe sowohl die genannte Abdichtung als auch eine Abdichtung des druckausgleichenden Kanales relativ zur Umgebung erreicht.

Die kennzeichnenden Merkmale des Anspruches 8 bewirken Druckausgleich zwischen dem Motor und einer Abdeckhaube, die elektrisch wirksame Komponenten wie Relais oder Halbleiterelemente enthält und dabei auch Elektromagnete von Ventilen des hydraulischen Aggregates durch Abdichtung zur Umgebung vor deren schädlichen Einflüssen schützt. Ein Druckausgleich sowohl des Inneren des Motors als auch der Abdeckhaube mit der Atmosphäre wird in einer das Aggregat schonenden Weise durchgeführt unter Zuhilfenahme eines mit der Abdeckhaube abgedichtet verbundenen Kabelmantels, den man im Fahrzeug an einer höchstmöglichen Stelle enden läßt, so daß die Gefahr des Eindringens von Wasser bei teilweise getauchtem Fahrzeug vermieden wird. Insoweit ist die Anordnung eines in der Druckschrift WO 96/13416 offenbarten und allein einem Druckausgleich dienenden Druckausgleichschlauches, der von einer tiefsten Stelle des hydraulischen Aggregates ausgeht und dann ansteigt, vermeidbar.

### Zeichnung

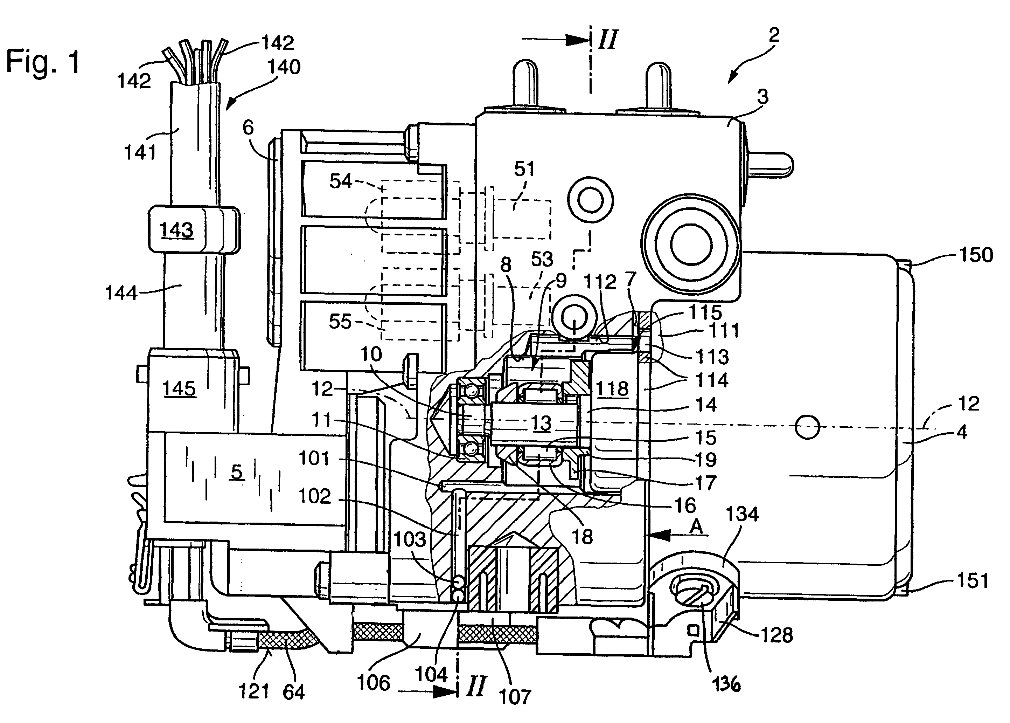

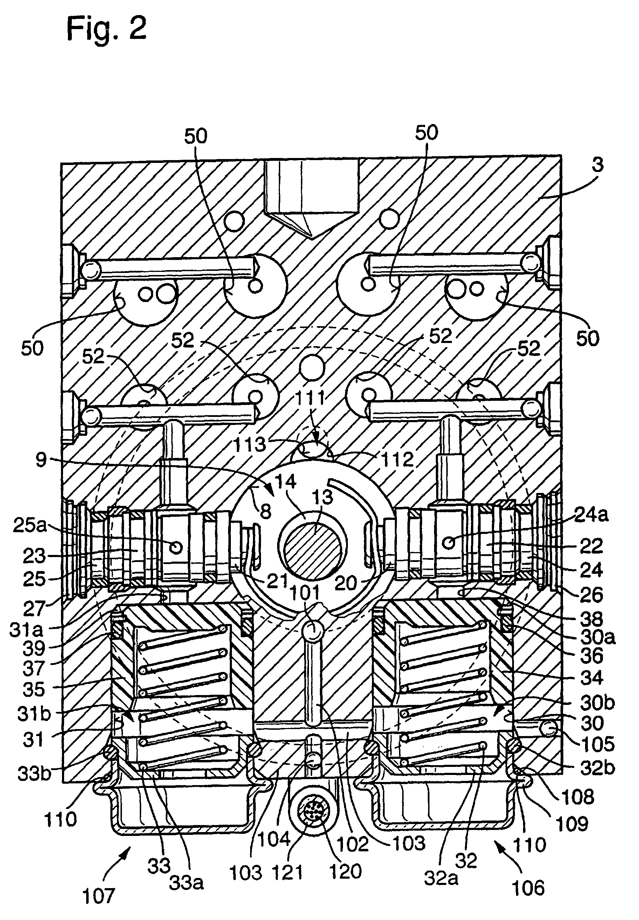

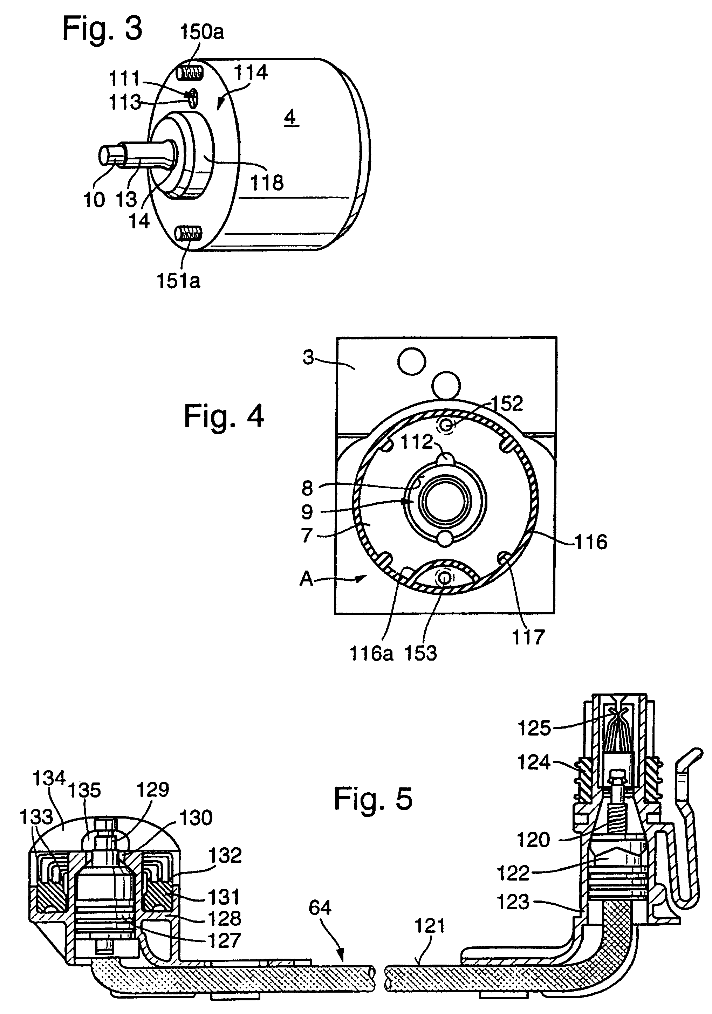

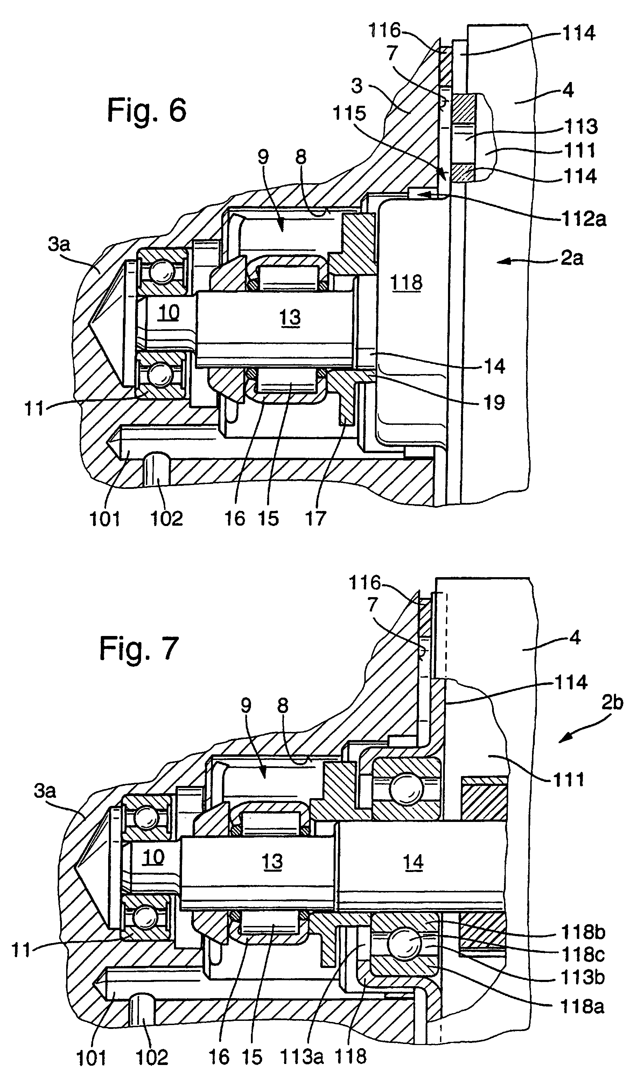

Drei Ausführungsbeispiele des erfindungsgemäßen hydraulischen Aggregates ist in der Zeichnung dargestellt und in der nachfolgenden Beschreibung näher erläutert. Es zeigen Figur 1 ein erstes Ausführungsbeispiel des erfindungsgemäßen hydraulischen Aggregats in der Seitenansicht und dabei in teilweise aufgeschnittenem Zustand, Figur 2 einen Querschnitt des Aggregates der Figur 1, Figur 3 einen Bestandteil des hydraulischen Aggregates im Schrägbild, Figur 4 ein Detail des hydraulischen Aggregates der Figur 1 in einer Stirnansicht, Figur 5 ein elektrisches Bestandteil im aufgeschnittenen Zustand für das Aggregat der Figur 1, Figur 6 ein zweites Ausführungsbeispiel des erfindungsgemäßen Aggregates in teilweise aufgeschnittenem Zustand und Figur 7 ein drittes Ausführungsbeispiel des erfindungsgemäßen Aggregates ebenfalls in teilweise aufgeschnittenem Zustand.

### Beschreibung des Ausführungsbeispiels

Das erfindungsgemäße hydraulische Aggregat 2 umfaßt als wesentliche Bauteile einen Gehäuseblock 3 und an den Gehäuseblock 3 angesetzt einen Motor 4, der allein in der Figur 3 dargestellt ist, ein Gehäuse 5 und eine Abdeckhaube 6. Weil hierbei das hydraulische Aggregat 2 weitgehende Übereinstimmung mit dem hydraulischen Aggregat gemäß der Druckschrift EP 0 699 571 A1 hat, genügt eine relativ kurze allgemeine Beschreibung, so daß erfindungswesentliche Merkmale besser hervortreten werden.

An einer Stirnseite A des Gehäuseblockes 3 befindet sich, wie dies in den Figuren 1 und 4 dargestellt ist, für den Motor 4 eine Befestigungsfläche 7. Senkrecht zu dieser Befestigungsfläche 7 erstreckt sich in den Gehäuseblock 3 hinein eine gestufte Bohrung 8, die eine Exzenterkammer 9 umgrenzt. Ein Wellenzapfen 10, der mittels eines Kugellagers 11, das von der gestuften Bohrung 8 gestützt ist, bestimmt eine Drehachse 12 für einen Exzenter 13, der einstückig mit einer Welle 14 ausgebildet ist. Die Welle 14 erstreckt sich von dem Exzenter 13 ausgehend hinein in den Motor 4. Der Motor 4 kann in einer nicht dargestellten Weise als ein Gleichstrommotor mit einem nicht dargestellten Anker und einem nicht dargestellten Kollektor sowie nicht dargestellten und dem Kollektor zugeordneten Kontaktbürsten ausgestattet sein. Ergänzend wird hier erwähnt, daß der dargestellte Exzenter 13 ein an sich bekanntes Hubelement ist neben an sich bekannten Taumelscheiben und anderen Hubkurven. Demgemäß ist zur Vermeidung unnötiger Einschränkung hier der Exzenter auch als ein Hubelement gemeint und demgemäß ist in erweiterndem Sinne anstelle einer Exzenterkammer 9 auch eine Hubelementkammer gemeint.

Ein Querschnitt durch den Exzenter 13 ist in der Figur 2 dargestellt. In der Figur 2 ist auch die sich hinter dem Exzenter 13 anschließende Welle 14 erkennbar. In der Figur 3 ist die Abfolge von dem Wellenzapfen 10, dem Exzenter 13 und der Welle 14 gut sichtbar dargestellt. Um den Exzenter 13 herum ist beispielsweise ein Nadellager 15 angeordnet, das von einem Lagerring 16 zusammengehalten wird. Beiderseits des Lagerrings 16 sind axiale Anschlagmittel 17, 18 für den Lagerring 6 vorgesehen. Der Lagerring 16 ist zwischen diesen axialen Anschlagmitteln 17 und 18 drehbar relativ zum Exzenter 13. Dabei hat das Anschlagmittel 17 eine Nabe 19, die fest auf der Welle 14 sitzt. Das axiale Anschlagmittel 18 ist in Form eines außen konischen Ringes ausgebildet und festsitzend auf den Exzenter 13 aufgepreßt. Die genannten Einzelteile sind in der Figur 1 dargestellt. Gemäß der Figur 2 sind quer zur Drehachse 12 des Exzenters 13 und dabei gleichachsig und spiegelbildlich zum Exzenter 13 zwei Pumpenkolben 20, 21 vorgesehen. Die Pumpenkolben 20, 21 sind verschiebbar in nicht dargestellten Pumpenzylinderbohrungen, die sich in Pumpenzylindern 22 und 23 befinden. Die Pumpenzylinder 22 und 23 sind mit Auslaßventilen 24 bzw. 25 kombiniert und bilden so zwei unabhängig voneinander wirksame Kolbenpumpen, die Eingänge 24a und 25a aufweisen. In an sich bekannter Weise sind diesen Eingängen 24a und 25a innerhalb der Kolbenpumpen nicht dargestellte Einlaß-Rückschlagventile zugeordnet. Die Kolbenpumpen 22, 23 sind beispielsweise mittels Verstemmungen 26, 27 im Gehäuseblock 3 fixiert. In ihren Längsrichtungen sind zur Druckerzeugung die Pumpenkolben 20 und 21 verschiebbar mittels des Exzenters 13, der weiter voranstehend auch als Hubelement bezeichnet wurde, unter Zwischenschaltung des Nadellagers 15 und seines Lagerringes 16. Zur Verschiebung in die jeweils entgegengesetzte Richtung sorgt ein an den Pumpenkolben 20 und 21 festgehakter C-förmiger Federbügel 28.

In der Figur 2 befinden sich unterhalb den Elementen 20, 22, 24 bzw. 21, 23, 25 der Kolbenpumpen 22, 23 erste zylindrische Bohrungen 30, 31, die senkrecht von unten her nach Art von Sacklochbohrungen in den Gehäuseblock 3 eingebohrt sind. In den Bohrungen 30 und 31 sind von Federn 32, 33 belastete Kolben 34 bzw. 35, die sogenannten Speicherkolben, angeordnet. Dichtringe 36 bzw. 37 sorgen dafür, daß oberhalb der Kolben 34, 35 abgedichtete Speicherräume 38 und 39 zur Verfügung stehen zur Aufnahme von Druckmittel. Von den zylindrischen Bohrungen 30 und 31 gehen nach oben Verbindungskanäle 30a und 31a aus, die die Speicherräume 38 und 39 mit den Eingängen 24a und 25a der beiden Kolbenpumpen 24 und 25 verbinden. Unterhalb der Kolben 34 und 35 bilden die zylindrischen Bohrungen 30 und 31 Federräume 30b und 31b. Die Federn 32 und 33 werden innerhalb der zylindrischen Bohrungen 30 und 31 gehalten mittels Federtellern 32a und 33a, die ihrerseits mittels Federdrahtringen 32b und 33b starr im Gehäuseblock 3 abgestützt sind. Die Verbindungskanäle 30a und 31a kommunizieren mit oberhalb der Kolbenpumpen 20, 21 befindlichen unteren Stufenbohrungen 52, die der Aufnahme von in der Figur 1 schematisch dargestellten Wegeventilen 53, die mittels elektromagnetischer Spulen 55 betätigbar sind, dienen. Die Wegeventile 53 im Ausführungsbeispiel sind sogenannte Bremsdruckabsenkventile. Des weiteren sind in der Figur 2 obere Stufenbohrungen 50 dargestellt, denen in der Figur 1 Wegeventile 51 mit elektrischen Spulen 54 zugeordnet sind. Weil sich der Erfindungsgegenstand nicht auf die hydraulische Verschaltung von Wegeventilen mit Radbremszylindern und einem Hauptbremszylinder bezieht, braucht hier nicht näher auf Details eingegangen zu werden.

In zur Erfindung gehörender Weise schließen sich nach unten von dem Exzenterraum bzw. Hubelementraum 9 ausgehend erste Kanalabschnitte 101, 102 und 103 an. Dabei ist der Kanalabschnitt 101 hergestellt nach Art einer Bohrung, die die gestufte Bohrung 8 an ihrer tiefsten Stelle schneidet und dadurch eine Art Rinne bildet und im weiteren Verlauf sich als eine zylindrische Bohrung beispielsweise parallel zur Drehachse 12 des Exzenters 13 erstreckt. Dabei endet der Kanalabschnitt 101 nach Art einer Sacklochbohrung. Den Kanalabschnitt 101 kreuzend und dabei in diesen Kanalabschnitt 101 mündend ist der Kanalabschnitt 102 angeordnet, der von einer Unterseite des Gehäuseblockes 3 gebohrt ist und angrenzend an die Unterseite mittels einer eingepreßten Kugel 104 verschlossen ist. Der Kanalabschnitt 103 ist wiederum in Form einer Bohrung erstellt, die von einer Seite des Gehäuseblockes 3 ausgeht, dabei die zylindrische Bohrung 30 kreuzt, in den Kanalabschnitt 102 mündet und diesen kreuzend sich weiter erstreckt und schließlich in die zylindrische Bohrung 31 mündet. Die Kanalabschnitte 101 bis 103 bilden einen vom Hubelementraum 9 abwärts gerichteten Kanal, der in die Federräume 30b und 31b mündet. Erkennbar ist, daß von den in der Figur 2 sichtbaren Enden der Kolben 20 und 21 abtropfendes Druckmittel einen Weg aus dem Hubelementraum 9 heraus und in die Federräume 30b und 31b findet. Das abtropfende Druckmittel ist dasjenige, das gemäß der Beschreibung des Standes der Technik als dasjenige Druckmittel bezeichnet ist, das anläßlich des Betriebs der Kolbenpumpen 22 und 23 nicht dargestellte Dichtringe passiert, also zwischen Dichtflächen hindurchgeschleppt wird.

Damit von unten her kein Schmutz und kein Wasser in die zylindrischen Bohrungen 30, 31 eindringt, sind diese mittels Verschlußelementen 106 und 107 verschlossen. Im Ausführungsbeispiel erfüllen die Verschlußelemente 106 und 107 sowohl die Aufgabe eines Deckels des Standes der Technik als auch zum zur Erfindung gehörenden Auffangen von Druckmittel, das mittels der ersten Kanalabschnitte 101, 102 und 103 aus dem Exzenterraum 9 abgeleitet ist.

Das Verschlußelement 106 bzw. 107 wird hier hergestellt als ein im wesentlichen becherartiges Tiefziehteil, neben dessen freiem Rand 108 zunächst eine Sicke 109 angeordnet wird, die dann zu einem gezeichneten flanschartigen Axialanschlag gestaucht wird. Mit dem freien Rand 108 voraus wird das Verschlußelement 106 bzw. 107 in die zylindrische Bohrung 30b bzw. 31b eingepreßt. Hierbei entsteht bereits eine gewisse Abdichtung, die ergänzt wird durch ein Dichtelement 110, das in aus dem Stand der Technik auswählbarer Weise beispielsweise ein vorgefertigter Dichtungsring sein kann oder aber eine vor dem Einbauen der Verschlußelemente 106 und 107 aufgebrachte Raupe aus zunächst flüssigem Silikongummi, der im Laufe der Zeit in einen gummielastischen Zustand übergeht. In der Figur 2 dargestellt ist, daß die oberen freien Ränder 108 dieser Verschlußelemente 106 und 107 unterhalb des Kanalabschnittes 103 liegen. Insoweit kann aus dem Kanalabschnitt 103 beispielsweise in beide zylindrische Bohrungen 30, 31 hinein Druckmittel entlang der Drahtringe 32b, 33b abwärts und in die Verschlußelemente 106 und 107 hinein gelangen. Erkennbar ist, daß je größer die axiale Erstreckung der Verschlußelemente 106 und 107 ist, um so mehr Druckmittel aufnehmbar ist, bevor angesammeltes Druckmittel das Niveau erreicht, auf dem der Kanalabschnitt 103 angeordnet ist. Damit auch aus einem Anfang eines zum Kanalabschnitt 103 gehörenden Bohrungsabschnittes kein Druckmittel nach außen gelangt, ist als ein Verschlußstück eine Kugel 105 in den Gehäuseblock 3 eingepreßt.

Ergänzend wird bemerkt, daß die einem jeden der zylindrischen Bohrungen 30 und 31 zugeordneten Verschlußelemente 106 und 107 austauschbar sind gegen einen gemeinsamen Deckel in der Art eines in der Druckschrift EP 0 662 891 B1 dargestellten Deckels, der gemäß der dortigen Figur 2 im wesentlichen wannenartig ausgebildet und unter Zwischenlage einer Dichtung gegen den Gehäuseblock gespannt ist. Wenn man einen solchen Deckel verwendet, so kann auf die in der Figur 2 der vorliegenden Anmeldung dargestellte Anordnung der Kugel 104, auf den Kanalabschnitt 103 sowie die den Kanalabschnitt 103 nach außen verschließende Kugel 105 verzichtet werden.

Ein gattungsgemäßer Druckausgleichkanal zwischen wenigstens einem Federraum 30b, 31b und dem Innern 111 des Motors 4 umfaßt die ersten Kanalabschnitte 101, 102 und 103 und den Exzenterraum bzw. Hubelementraum 9 und schließlich zweite Kanalabschnitte 112 und 113. Dabei ist der Kanalabschnitt 113 ausgebildet als ein Loch in einer dem Gehäuseblock 3 zugekehrten Motorstirnwand 114. Der Kanalabschnitt 112 ist beispielsweise nach Art einer halb aufgeschnitten Bohrung, die die Kontur der Stufenbohrung 8 schneidet, ausgebildet vergleichbar einem Teilstück des Kanalabschnittes 101, der voranstehend beschrieben ist. Zwischen den Kanalabschnitten 112 und 113 liegt ein Kanalabschnitt 115, der radial innerhalb eines Dichtelementes 116 liegt, das zwischen der Motorstirnwand 114 und der vom Gehäuseblock 3 bereitgestellten Befestigungsfläche 7 liegt. Gemäß der Figur 4 ist dieses Dichtelement 116 ringförmig verlaufend ausgebildet und entweder aus einem Dichtungswerkstoff ausgestanzt, spritzgeformt oder aber bevorzugt, wie dies für das Dichtelement 110 der Verschlußelemente 106 und 107 beschrieben ist, aus einem zunächst flüssigen Dichtwerkstoff wie Silikongummi hergestellt durch Aufgießen oder Aufspritzen auf die Befestigungfläche 7. Ein solcherart hergestelltes Dichtelement wird manchmal auch als Abdichtraupe bezeichnet und hat hier beispielsweise eine in axialer Richtung des Motors 4 gemessene Dicke von im wesentlichen zwei Millimetern. Radial innerhalb dieses Dichtelementes 116 können beispielsweise vier beispielsweise elastische Stützelemente 117 angeordnet sein.

Erkennbar ist nun, daß vom Exzenterraum 9 aus der Kanalabschnitt 112 radial außerhalb eines ein nicht dargestelltes Kugellager aufnehmenden Zentrieransatzes 118, der in Richtung des Exzenters 13 von der Motorstirnwand 114 ausgeht, zwischen die Motorstirnwand 114 und die Befestigungsfläche 7, die sich am Gehäuseblock 3 befindet, und dabei radial innerhalb des Dichtelementes 116 erstreckt und sich schließlich in dem Kanalabschnitt 113, der von einem Loch in der Motorstirnwand 114 gebildet ist, fortsetzt. Dies bewirkt Druckausgleich zwischen dem Innern 111, also einem Hohlraum des Motors 4, und dem Exzenterraum 9. Zusammen mit den zuerst beschriebenen ersten Kanalabschnitten 101, 102 und 103 besteht zwischen der wenigstens einem Federraum 30b, 31b und dem Innenraum 111 des Motors 4 ein Druckausgleichkanal, der beim Bewegen wenigstens eines der beiden Kolben 34, 35 gegen die Kraft der jeweiligen Feder 32, 33 Luft aus dem jeweiligen Federraum 30b, 31b entweichen läßt in den Innenraum 111, zu dem Zweck, daß ein Verschiebewiderstand des jeweiligen Kolbens 34 bzw. 35 im wesentlichen durch die Kraft der jeweiligen Feder 32, 33 bestimmt ist. Erkennbar ist, daß zum Ableiten von Druckmittel aus dem Exzenterraum 9 und zum Druckausgleich zwischen den Federräumen 30b und 31b mit dem Innenraum 111 des Motors 4 erste Kanalabschnitte 101, 102 und 103 in zweifacher Weise benützt werden. Dies ergibt eine Kostenersparnis gegenüber zwei separat ausgebildeten Kanälen, von denen der eine dem Wegleiten von Druckmittel und der andere dem Druckausgleich dienen würde.

In der Figur 1 dargestellt ist ein Kabel 64, das von dem Gehäuse 5 ausgeht und zu dem Motor 4 führt für dessen Stromversorgung. Das Gehäuse 5 ist dabei ein Gehäuse, in dem beispielsweise ein Relais zum Schalten des elektrischen Stromes für den Motor 4 angeordnet ist. In zur Erfindung gehörender Weise wird ein Druckausgleich geschaffen zwischen dem Innenraum 111 des Motors 4 und dem Gehäuse 5, das relativ zum Gehäuseblock 3 abgedichtet ist. Zum Druckausgleich dient hier ein Druckausgleichskanal, der gebildet ist von Zwischenräumen zwischen Drähten 120 des Kabels 64 und einem schlauchartigen Kabelmantel 121, der die Drähte 120 umhüllt.

Dem Gehäuse 5 zugeordnet ist der Kabelmantel 121 von einer Abdichttülle 122 umgeben, die abdichtend in ein Steckerteil 123 eingesetzt ist. Das Steckerteil 123 seinerseits hat außen eine weitere Abdichttülle 124, die beim Einstecken des Steckerteiles 123 in eine Fassung, die sich im Gehäuse 5 befindet, wirksam wird. Innerhalb des Steckerteils 123 sind Kontaktspangen 125 vorgesehen, die durch Verkrallen mit den Drähten 120 elektrisch verbunden sind. Es ist erkennbar, daß infolge der Ausbildung der Kontaktspangen 125 als ein Blechbiegeteil mit einem Zentralabschnitt 126 von den Kontaktspangen 125 aus gesehen das Steckerteil 123 durchströmbar ist bis zwischen die dargestellten Drähte 120 und von da aus zwischen den Drähten durch den Kabelmantel 121 hindurch.

In vergleichbarer Weise ist der Kabelmantel 121 in eine weitere Abdichttülle 127 eingeführt, die sich innerhalb eines zweiten Steckerteiles 128 befindet. Anstelle der bereits beschriebenen Kontaktspangen 125 ist an die innerhalb des Kabelmantels 121 verlaufenden Drähte ein Steckstift 129 elektrisch angeschlossen. Das elektrische Anschließen kann in an sich bekannter Weise wiederum durch Verkrallen erfolgen, wozu in die Abdichttülle 127 hineinragend der Steckerstift 129 eine rohrartige Verlängerung aufweist, die gegen die Drähte 120 gequetscht ist. Damit der Steckerstift 129 von Luft umströmbar ist, ist er mittels Zentrierrippen 130 innerhalb des Steckerteiles 128 ausgerichtet. Dem Steckstift 129 ist innerhalb des Motors 4 eine nicht dargestellte Kontaktbuchse zugeordnet, an die beispielsweise ein Bürstenhalter, der ebenfalls nicht dargestellt ist, angeschlossen ist. Die Zentrierrippen 130 gehen radial einwärts von einem rohrförmigen Abschnitt 131 aus. Über diesen rohrförmigen Abschnitt 131 ist ein Dichtelement 132 gesteckt, das gegen den Motor 4 gerichtete Dichtrippen 133 aufweist. Damit die Dichtrippen 133 ausreichend fest an den Motor 4 andrückbar sind, sind an das Steckerteil 128 Befestigungslaschen 134 mit Schraubenlöchern 135 angeformt. Eine Befestigungslasche ist in der Figur 1 sichtbar. Das Schraubenloch 135 ist nicht sichtbar, weil es von dem Kopf 136 einer Befestigungsschraube verdeckt ist.

Der Kabelmantel 121 ist wenigstens mittelbar mit einem Anschlußkabel 140 druckausgleichend verbunden, wobei das Anschlußkabel 140 wiederum aus einem Kabelmantel 141 und hier mehreren ummantelten Anschlußlitzen 142 besteht.

Durch im einzelnen nicht beschriebene Elemente 143 und 144, die aus dem allgemeinen Stand der elektrischen Anschlußtechnik entnehmbar sind, ist eine Verbindung geschaffen zu einem am Gehäuse 5 befindlichen abgedichteten Steckersockel 145. Insoweit ist vermieden, daß zwischen einem nicht erkennbaren Ende des Kabelmantels 141 und dem Gehäuse 5 Wasser eintritt. In zum Stand der Technik gehörender Weise sind im Steckersockel 145 und in dem Anschlußteil 144 nicht dargestellte Kontaktelemente so angeordnet, daß ausgehend von den Anschlußlitzen 142 wiederum Strömungsmöglichkeiten für Luft vorhanden sind und dabei aus dem Kabelmantel 141 in das Gehäuse 5 oder umgekehrt. Das Anschlußkabel 140 wird innerhalb des Fahrzeugs hochgeführt zu einer möglichst hochliegenden Stelle, von der angenommen wird, daß in sie kein Wasser eindringt. Infolgedessen wirkt in gewollter Weise der Kabelmantel 141 als ein Druckausgleichkanal zwischen der umgebenden Atmosphäre und dem Inneren des Gehäuses 5 und mittelbar auch durch den Kabelmantel 121 hindurch für den Motor 4.

Die im einzelnen beschriebenen Maßnahmen vermeiden also unmittelbar am hydraulischen Aggregat 2 das Eindringen von Wasser, schaffen dennoch einen Druckausgleich von Innenräumen des hydraulischen Aggregates 2 zur umgebenden Atmosphäre und bewirken außerdem das Ableiten von per Pumpenkolben verschlepptem Druckmittel in einen Bereich des Aggregates, der fern von empfindlichen elektrischen Bauteilen des hydraulischen Aggregates liegt. Dadurch ist vermieden, daß gegebenenfalls in dem Druckmittel vorhandene elektrolytisch wirkende Bestandteile elektrische Komponenten angreifen oder unwirksam machen.

### Beschreibung des zweiten Ausführungsbeispiels

Das zweite Ausführungsbeispiel einer Blockierschutzeinrichtung 2a gemäß der Figur 6 ist bezüglich des Ableitens von per Pumpenkolben verschlepptem Druckmittel gleichartig ausgebildet wie das erste Ausführungsbeispiel gemäß den Figuren 1, 2, 3 und 4. Deshalb sind in der Figur 6 von ersten Kanalabschnitten nur der vom Hubelementraum 9 ausgehende Kanalabschnitt 101 und eine Teillänge des von dem Kanalabschnitt 101 nach unten sich erstreckenden Kanalabschnitts 102 dargestellt. Unterschiedlich zum ersten Ausführungsbeispiel ist, daß das Bauelement 118 hier der zentrischen Aufnahme eines nicht dargestellten Kugellagers dient. Dieses nicht dargestellte Kugellager ist bestimmt, die Welle 14 zu umfassen und dabei zentrisch zum Motor 4 zu lagern. Im Bereich des Bauelements 118 ist deshalb die gestufte Bohrung 8 so ausgebildet, daß zwischen dieser und dem Bauelement 118 sich ein ringförmiger zweiter Kanalabschnitt 112a öffnet. In Richtung zum Inneren 111 des Motors 4 schließt sich ein weiterer zweiter Kanalabschnitt 115 an, der wie im ersten Ausführungsbeispiel innerhalb eines Dichtelementes 116 und dabei zwischen einer Befestigungsfläche 7 eines Gehäuseblocks 3a und einer Motorstirnwand 114 verläuft. Wiederum verbindet ein weiterer zweiter Kanalabschnitt 113, der als ein Loch in der Motorstirnwand 114 ausgebildet ist, den zweiten Kanalabschnitt 115 mit dem Inneren 111 des Motors 4.

In der Figur 1 teilweise dargestellt sind ein oberer Schraubenkopf 150 und ein unterer Schraubenkopf 151 von zwei Schrauben 150a und 151a, die gemäß der Figur 3 zur Befestigung des Motors 4 durch diesen hindurch gesteckt sind zum Einschrauben in den Gehäuseblock 3a. Hierfür sind, wie dies in der Figur 4 dargestellt ist, zwei Gewindelöcher 152 und 153 in dem Gehäuseblock angeordnet. Damit verschlepptes Druckmittel, das gegebenenfalls aus dem Hubelementraum 9 durch den zweiten Kanalabschnitt 112a zwischen die Befescigungsfläche 7 und die Motorstirnwand 114 gelangt, nicht zum Gewindeloch 153 und somit auch nicht entlang der unteren Schraube 151a in den Motor 4 gelangt, geht von dem Dichtelement 116 noch ein um das Gewindeloch 153 beispielsweise gleichmäßig gekrümmt verlaufender Dichtstreifen 116a aus.

Im zweiten Ausführungsbeispiel gemäß der Figur 6 besitzt der Motor zwei Lager für die Welle 14 beiderseits eines nicht gezeichneten Ankers. Dabei ist eines der beiden Lager das bereits erwähnte Kugellager in dem Bauelement 118. Beim Anbauen eines solchen Motors 4 an den Gehäuseblock 3a erfolgt das Zentrieren des Motors relativ zum Hubelementraum 9 beim Einstecken des Wellenzapfens 10 in das im Gehäuseblock 3a befindliche Kugellager 11.

Wie für das erste Ausführungsbeispiel beschrieben, kann auch hier wahlweise das Dichtelement 116 sowie der Dichtstreifen 116a aus Dichtmittel gegossen oder gespritzt oder aus einer Platte ausgestanzt werden.

### Beschreibung des dritten Ausführungsbeispiels

Das dritte Ausführungsbeispiel des erfindungsgemäßen hydraulischen Aggregats 2b gemäß der Figur 7 übernimmt beispielsweise den Gehäuseblock 3a des zweiten Ausführungsbeispiels gemäß der Figur 6, so daß verschlepptes Druckmittel, das aus Pumpenelementen 22, 23 stammt und aus dem Hubelementraum 9 wegzuleiten ist, fern von dem Inneren 111 des Motors 4 durch Kanalabschnitte 101, 102 nach unten abfließen kann.

Dem Druckausgleich zwischen dem Hubelementraum 9 und dem Inneren 111 des Motors 4 dient als ein zweiter Kanalabschnitt eine in den Hubelementraum 9 mündende Öffnung des Bauteils 118, wobei diese Öffnung einen die Welle 14 umgebenden ringartigen zweiten Kanalabschnitt 113a bildet. An diesen zweiten Kanalabschnitt 113a schließt sich ein weiterer zweiter Kanalabschnitt 113b an, der zwischen einem die Welle 4 umgreifenden inneren Kugellagerring 118b und einem relativ zum Gehäuseblock 3a ruhenden äußeren Kugellagerring 118a und dabei zwischen Lagerkugeln 118c verläuft. Da andererseits in bereits beschriebener Weise der Hubelementraum 9 durch erste Kanalabschnitte 101, 102 und 103 mit den Federkammern 30b und 31b kommuniziert, ist durch den Hubelementraum hindurch wiederum Druckausgleich zwischen den Federkammern 30b und 31b und dem Inneren 111 des Motors 4 möglich. Dieses dritte Ausführungsbeispiel kommt ohne in den Figuren 1, 2, 3 und 6 dargestellte und jeweils einen zweiten Kanalabschnitt 113 bildende Öffnungen aus, was die Fertigung verbilligt.

Ergänzend wird noch darauf hingewiesen, daß in das beschriebene dritte Ausführungsbeispiel gemäß der Figur 7 auch die zweiten Kanalabschnitte 112a, 115 und 113 des zweiten Ausführungsbeispiels gemäß der Figur 6 übernommen werden können zu dem Zweck, Druckausgleich zwischen den Federkammern 30b, 31b und dem Inneren 111 des Motors 4 zu begünstigen.

## Patentansprüche

1. Hydraulisches Aggregat einer Fahrzeugbremsanlage, wobei das Aggregat (2) innerhalb eines Gehäuseblockes (3,3a) wenigstens eine Kolbenpumpe mit einem Kolben (20,21) und ein den Kolben (20,21) verschiebendes Hubelement (13) einen Hubelementraum (9), in dem das Hubelement (13) drehbar ist, einen Motor (4) zum Antreiben des Hubelementes (13), wenigstens ein elektrisch steuerbares Ventil (51,53) und einem Eingang (24a,25a) der wenigstens einen Kolbenpumpe zugeordnet wenigstens einen Speicher aufweist, der aus einem Zylinder (30,31), einem in diesem verschiebbaren Speicherkolben (34,35), der den Zylinder (30,31) in einen variablen Speicherraum (38,39) und einen Federraum (30b,31b) unterteilt, einer den Speicherkolben (34,35) belastenden Feder (32,33), die mittelbar am Gehäuseblock (3) abgestützt ist, und einem den Federraum (30b,31b) relativ zu der Umgebung verschließenden Verschlußelement (106,107) besteht, wobei von dem Federraum (30b,31b) ein Druckausgleichskanal (101,102,103,9,112,113) ausgeht, der zum Motor (4) führt und mit dessen Innenraum (111) kommuniziert, **dadurch gekennzeichnet, daß** ein Leckage ableitender Kanal (101, 102, 103) an einer tiefen Stelle des Hubelementraumes (9) ausgeht und zu dem wenigstens einen Federraum (30b, 31b) verläuft und in diesen mündet.

2. Hydraulisches Aggregat nach Anspruch 1, **dadurch gekennzeichnet, daß** der Druckausgleichskanal aus wenigstens einem ersten Kanalabschnitt (101, 102, 103) unterhalb des Hubelementraumes (9), wenigstens einem Teil des Hubelementraumes (9) und wenigstens einem zweiten Kanalabschnitt (112a, 113, 113a, 113b, 115), der sich an den Hubelementraum (9) anschließt, besteht, wobei der wenigstens eine zweite Kanalabschnitt (113) mit dem Innenraum (111) des Motors (4) kommuniziert und wobei der wenigstens eine erste Kanalabschnitt (101, 102, 103) den Leckage ableitenden Kanal bildet.

3. Hydraulisches Aggregat nach Anspruch 1 oder 2, **dadurch gekennzeichnet, daß** der wenigstens eine Zylinder (30, 31) mit seiner Achse im wesentlichen senkrecht und mit dem Federraum (30b, 31b) nach unten ausgerichtet ist und daß das wenigstens eine Verschlußelement (106, 107) zu einem topfartigen Sammelbehälter weitergebildet ist.

4. Hydraulisches Aggregat nach Anspruch 3, **dadurch gekennzeichnet, daß** der Behälter (106, 107) als ein Tiefziehteil mit einem Axialanschlag (109) ausgebildet und mit seinem freien Rand (108) voraus in den jeweiligen Zylinder (30, 31) eingepreßt ist.

5. Hydraulisches Aggregat nach Anspruch 4, **dadurch gekennzeichnet, daß** zwischen den Axialanschlag (109) und den Gehäuseblock (3, 3a) ein vorzugsweise aus flüssigem Silikongummi geformtes Dichtelement (110) angeordnet ist.

6. Hydraulisches Aggregat nach Anspruch 1 oder 2, **dadurch gekennzeichnet, daß** der Motor (4) eine gegen den Gehäuseblock (3, 3a) gerichtete Stirnwand (114) aufweist, in der sich eine einen zweiten Kanalabschnitt (113, 113a, 113b) bildende Öffnung befindet und daß radial außerhalb der Umgrenzung der Öffnung zwischen der Stirnwand (114) und dem Gehäuseblock (3) ein Dichtelement (116) angeordnet ist.

7. Hydraulisches Aggregat nach Anspruch 6, **dadurch gekennzeichnet, daß** das Dichtelement (116) in Form eines kreisringartig geschlossenen Auftrages eines Dichtmittels wie flüssiger Silikongummi ist, der in einen gummielastischen Zustand übergeht.

8. Hydraulisches Aggregat nach einem der Ansprüche 1, 2, 6 oder 7, **dadurch gekennzeichnet, daß** von dem Motor (4) ein elektrisches Kabel (24) aus Drähten (120) mit einem wasserdichten Kabelmantel (121) ausgeht und zu einem an den Gehäuseblock (3, 3a) angeflanschten Gehäuse (5) geführt ist und daß der wasserdichte Kabelmantel (121) wenigstens mittelbar relativ zu einem Gehäuseteil des Motors (4) und dem Gehäuse (5) abgedichtet ist, wobei Hohlräume zwischen den Drähten (120) und dem Kabelmantel (121) einen Druckausgleichskanal bilden zwischen dem Innenraum (111) des Motors (4) und dem Innern des Gehäuses (5).

## Claims

1. Hydraulic assembly of a vehicle brake system, the assembly (2) having, within a housing block (3, 3a), at least one piston pump with a piston (20, 21) and a lifting element (13) displacing the piston (20, 21), a lifting-element space (9), in which the lifting element (13) is rotatable, a motor (4) for driving the lifting element (13), at least one electrically controllable valve (51, 53) and, assigned to an inlet (24a, 25a) of the at least one piston pump, at least one accumulator which consists of a cylinder (30, 31), of an accumulator piston (34, 35) which is displaceable in the latter and which subdivides the cylinder (30, 31) into a variable accumulator space (38, 39) and a spring space (30b, 31b), of a spring (32, 33) which loads the accumulator piston (34, 35) and which is supported indirectly on the housing block (3), and of a closing element (106, 107) closing the spring space (30b, 31b) in relation to the surroundings, the spring space (30b, 31b) having emanating from it a pressure-compensating duct (101, 102, 103, 9, 112, 113) which leads to the motor (4) and communicates with the interior (111) of the latter, **characterized in that** a leakage-discharging duct (101, 102, 103) starts at a low point of the lifting-element space (9), runs to the at least one spring space (30b, 31b) and issues into the latter.

2. Hydraulic assembly according to Claim 1, **characterized in that** the pressure-compensating duct consists of at least one first duct portion (101, 102, 103) below the lifting-element space (9), of at least one part of the lifting-element space (9) and of at least one second duct portion (112a, 113, 113a, 113b, 115) which adjoins the lifting-element space (9), the at least one second duct portion (113) communicating with the interior (111) of the motor (4), and the at least one first duct portion (101, 102, 103) forming the leakage-discharging duct.

3. Hydraulic assembly according to Claim 1 or 2, **characterized in that** the at least one cylinder (30, 31) is oriented with its axis essentially vertically and with the spring space (30b, 31b) downwards, and **in that** the at least one closing element (106, 107) is developed into a pot-like collecting vessel.

4. Hydraulic assembly according to Claim 3, **characterized in that** the vessel (106, 107) is produced as a deep-drawn part with an axial stop (109) and is pressed, with its free edge (108) in front, into the respective cylinder (30, 31).

5. Hydraulic assembly according to Claim 4, **characterized in that** a sealing element (110) formed preferably from liquid silicone rubber is arranged between the axial stop (109) and the housing block (3, 3a).

6. Hydraulic assembly according to Claim 1 or 2, **characterized in that** the motor (4) has an end wall (114) which is directed towards the housing block (3, 3a) and in which is located an orifice forming a second duct portion (113, 113a, 113b), and **in that** a sealing element (116) is arranged, radially outside the boundary of the orifice, between the end wall (114) and the housing block (3).

7. Hydraulic assembly according to Claim 6, **characterized in that** the sealing element (116) is in the form of an annularly closed coating of a sealing medium, such as liquid silicon rubber, which changes into an elastomeric state.

8. Hydraulic assembly according to one of Claims 1, 2, 6 or 7, **characterized in that** an electrical cable (24) consisting of wires (120) with a water-tight cable sheath (121) emanates from the motor (4) and is lead to a housing (5) flanged onto the housing block (3, 3a), and **in that** the water-tight cable sheath (121) is sealed off at least indirectly in relation to a housing part of the motor (4) and to the housing (5), cavities between the wires (120) and the cable sheath (121) forming a pressure-compensating duct between the interior (111) of the motor (4) and the inside of the housing (5).

## Revendications

1. Unité hydraulique d'un système de freinage d'un véhicule, dans laquelle
- l'unité (2) comprend à l'intérieur d'un bloc de boîtier (3, 3a), au moins une pompe à piston dont le piston (20, 21) peut coulisser sous l'action d'un maneton (13) monté en rotation dans une chambre de maneton (9), un moteur (4) pour entraîner le maneton (13), au moins une soupape (51, 53) à commande électrique et au moins un accumulateur associé à une entrée (24a, 25a) d'au moins une pompe à piston,
- l'accumulateur est constitué par un cylindre (30, 31) dans lequel peut coulisser un piston d'accumulateur (34, 35) qui divise le cylindre (30, 31) en une chambre d'accumulation (38, 39) variable et une chambre élastique (30b, 31b), par un ressort (32, 33) chargeant le piston d'accumulateur (34, 35) et s'appuyant directement dans le bloc de boîtier (3) et par un élément de fermeture (106, 107) séparant la chambre élastique (30b, 31b) de son environnement,
- de la chambre élastique (30b, 31b) part un canal d'équilibrage de pression (101, 102, 103, 9, 112, 113) qui aboutit au moteur (4) et communique avec le volume intérieur (11) de celui-ci,
**caractérisée en ce qu'**
un canal (101, 102, 103) de déviation de fuite part d'un point bas de la chambre de maneton (9) en direction d'au moins une chambre élastique (30b, 31b) dans laquelle il débouche.

2. Unité hydraulique selon la revendication 1,
**caractérisée en ce que**
le canal d'équilibrage de pression est composé d'au moins une première section de canal (101, 102, 103) située en dessous de la chambre de maneton (9), d'au moins une partie de cette chambre (9) et d'au moins une deuxième section de canal (112a, 113, 113a, 113b, 115) raccordée à la chambre (9), au moins la deuxième section de canal (113) communiquant avec le volume intérieur (111) du moteur (4), tandis qu'au moins une première section de canal (101, 102, 103) constitue le canal de dérivation de la fuite.

3. Unité hydraulique selon l'une quelconque des revendications 1 ou 2,
**caractérisée en ce qu'**
au moins un cylindre (30, 31) a son axe sensiblement vertical et sa chambre élastique (30b, 31b) dirigée vers le bas, au moins un élément de fermeture (106, 107) constituant un récipient collecteur en forme de pot.

4. Unité hydraulique selon la revendication 3,
**caractérisée en ce que**
le récipient (106, 107) est une pièce réalisée par étirage profond, qui présente une butée axiale (109) et qui est enfoncée à force avec son bord libre (108) en avant, dans le cylindre correspondant (30, 31).

5. Unité hydraulique selon la revendication 4,
**caractérisée en ce qu'**
entre la butée axiale (109) et le bloc de boîtier (3, 3a) est monté un élément d'étanchéité (110) formé de préférence à partir de caoutchouc de silicone liquide.

6. Unité hydraulique selon l'une quelconque des revendications 1 ou 2,
**caractérisée en ce que**
le moteur (4) présente une paroi frontale (3, 3a) faisant face au bloc de boîtier (3, 3a) et dans laquelle se trouve une ouverture formant une deuxième section de canal (113, 113a, 113b),
un élément d'étanchéité (116) étant monté entre la paroi frontale (114) et le bloc (3), radialement vers l'extérieur, au-delà de la limite de l'ouverture.

7. Unité hydraulique selon la revendication 6,
**caractérisée en ce que**
l'élément d'étanchéité (116) a la forme d'un dépôt annulaire circulaire fermé constitué d'un agent d'étanchéité tel que du caoutchouc de silicone liquide qui se transforme pour passer à un état élastique comme du caoutchouc.

8. Unité hydraulique selon l'une quelconque des revendications 1, 2, 6 ou 7,
**caractérisée en ce que**
- du moteur (4) part un câble électrique (24), constitué de fils (120) logés dans une gaine de câble (121) étanche à l'eau, qui aboutit à un boîtier (5) monté par bride sur le bloc de boîtier (3, 3a), et
- la gaine du câble (121) étanche à l'eau est rendue étanche au moins directement par rapport à une partie du boîtier du moteur (4) et par rapport au boîtier (5), les volumes creux situés entre les fils (120) et la gaine de câble (121) formant un canal d'équilibrage des pressions reliant le volume interne (111) du moteur (4) et l'intérieur du boîtier (5).
